Europäisches Patentamt

European Patent Office

Office européen des brevets

(11) Publication number: **0 402 967**
**A1**

## (12) EUROPEAN PATENT APPLICATION

(21) Application number: 90201144.4

(22) Date of filing: 07.05.90

(51) Int. Cl.⁵: **B23B 39/16**

(30) Priority: 15.06.89 IT 2088489

(43) Date of publication of application:
**19.12.90 Bulletin 90/51**

(84) Designated Contracting States:
**AT BE CH DE ES FR GB IT LI NL SE**

(71) Applicant: SALVAGNINI TRANSFERICA S.p.A.
Strada della Favorita
I-36040 Sarego (Vicenza)(IT)

(72) Inventor: Salvagnini, Guido
Via dalla Prà
I-36040 Sarego (Vicenza)(IT)

(74) Representative: Marchi, Massimo et al
c/o Marchi & Mittler s.r.l. Viale Lombardia 20
I-20131 Milano(IT)

(54) **Multiple drilling fixture usable in automatic and flexible production systems.**

(57) The drilling fixture comprises a supporting casing (1) closed by a plate (2) provided with holes (3) for housing the machining tools (11) in positions corresponding to the holes to be accomplished in the piece, a motorization assembly (4) including an axial control shaft (5) and a driven shaft (6) eccentrically supported by said axial control shaft (5) and a plate (7) for the transmission of the motion from said motorization assembly (4) to the machining tools (11) which is fastened to the driven shaft (6) and is provided with a plurality of holes (8) distributed in the same manner as the holes in the piece to be machined and laterally displaced with respect to them in an amount equal to the eccentricity of the driven shaft (6) so as to act as housing seats for eccentric pivots (9) associated with cranks (10) controlling the rotation of said machining tools (11).

Fig.1

## Multiple drilling fixture usable in automatic and flexible production systems.

The present invention relates to a multiple drilling fixture usable in automatic and flexible production systems.

It is known that in order to produce a mechanical piece it is necessary to execute on it many holes with parallel axes and if that piece is to be produced in large numbers, instead of executing one hole at a time with a machine tool which can use just one tool at a time, it is economical to execute all parallel holes simultaneously with a multiple fixture, that is, containing as many individual drilling tools as there are holes and with a machine tool suitable for transmitting the necessary power to all the tools rotating simultaneously.

The known technique provides for the construction of said multiple fixture, in particular the design of the special mechanism having many gears for the transmission of the motion from the only chuck of the machine tool to the individual drilling tools arranged at the particular distances one from the other established by the drawing of the piece to be produced, only when the quantity of parts to be drilled justifies such construction.

The design and construction of the specific mechanism with many gears of different diameters is customised, varying each time according to the piece to be produced, and thus requires, even for a specialist, more time than that available for the delivery of the drilled pieces.

This implies evident difficulties in the case where the decision to produce pieces with a great many holes, for which it would be economical to use a multiple fixture is taken on short notice as often occurs for subcontractors.

The increasingly frequent requirement of production flexibility, to cope with increasingly fickle markets, has amplified the importance of the problem mentioned above.

The object of the present invention is to accomplish a multiple drilling fixture which can be designed and constructted automatically and quickly so as to cope with requirements of production flexibility and early delivery dates.

According to the invention such object is attained with a multiple drilling fixture usable in automatic and flexible production systems, characterized in that it comprises a supporting casing closed by a plate provided with holes for housing the machining tools distributed in reciprocal positions corresponding to the holes to be accomplished in the piece, a motorization assembly including an axial control shaft and a driven shaft eccentrically supported by said axial control shaft and a plate for the transmission of the motion from said motorization assembly to said machining tools which is fastened to said driven shaft and is provided with a plurality of holes distributed in the same manner as said holes in the piece to be machined and laterally displaced with respect to them in an amount equal to the eccentricity of said driven shaft with respect to said control shaft so as to act as housing seats for eccentric pivots associated with cranks controlling the rotation of said tools.

In this way it is possible to accomplish part of the fixture in a standard manner and to differentiate the fixtures one from the other simply by providing the two distribution plates with holes corresponding to those of the holes to be drilled into the piece.

The use of a computer is advantageously provided for, in whose memory the piece's machining program is stored, to accomplish the fixture, in particular it provides for the drilling of the pair of plates, of the pivot housing plate for the eccentric pivots associated with the cranks controlling the rotation of the tools and the tool housing plate, respectively, in relation to the holes to be drilled in the piece being machined.

The features of the present invention shall be made more evident by the following detailed description of a preferred embodiment, illustrated as a non-limiting example in the enclosed drawings, wherein:

Fig. 1 is an axial cross-sectional view of the fixture;

Fig. 2 is an axial cross-sectional view of the fixture in a machining position rotated through 180° with respect to the position of Fig. 1;

Fig. 3 is a transversal cross-sectional view of the fixture taken along the line III-III of Fig. 1.

With reference to the drawings the fixture comprises a supporting casing 1 having a circular cross-section closed at the bottom by a plate 2 provided with holes 3 for housing machining tools 11 which are reciprocally positioned in a manner similar to that of the holes to be accomplished in a piece. In particular in said holes 3 there are inserted drill supporting chucks 30. Each chuck 30 is constituted by a bush 31, by a small shaft 32 which is hollow at the external extremity 33 to receive adaptors 34 for tools constituted by perforation drills 35.

To said casing 1 there is rotatably connected a motorization assembly 4 comprising an axial control shaft 5 provided with a terminal tang 70 for its connection to the chuck of a machine tool for its rotation round an axis 20 and a driven shaft 6, with the corresponding axis 21 eccentric with respect to axis 20, which can orbit round said shaft 20 of the axial control shaft 5. With the driven shaft there is made integral a transmission plate 7 of the motion from said motorization assembly 4 to said machining tools 11 provided with a plurality of holes 8 distributed as said holes in the piece to be machined. The axis 22 of said holes 8 is laterally displaced with respect to the axis 23 of the corresponding holes in the piece to be machined in an amount equal to the eccentricity of said axis 21 of the driven shaft 6 with respect to the axis 20 of the control shaft 5. Said holes 8 act as housing seats for eccentric pivots 9, which are rotatably connected to the plate 7, and are associated with cranks 10 controlling the rotation of said machining tools 11.

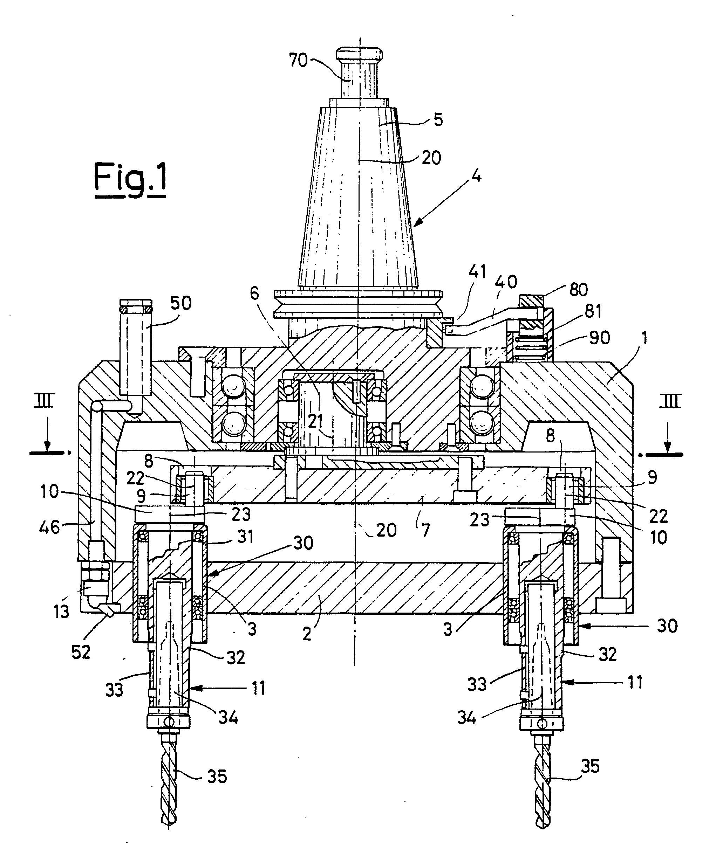

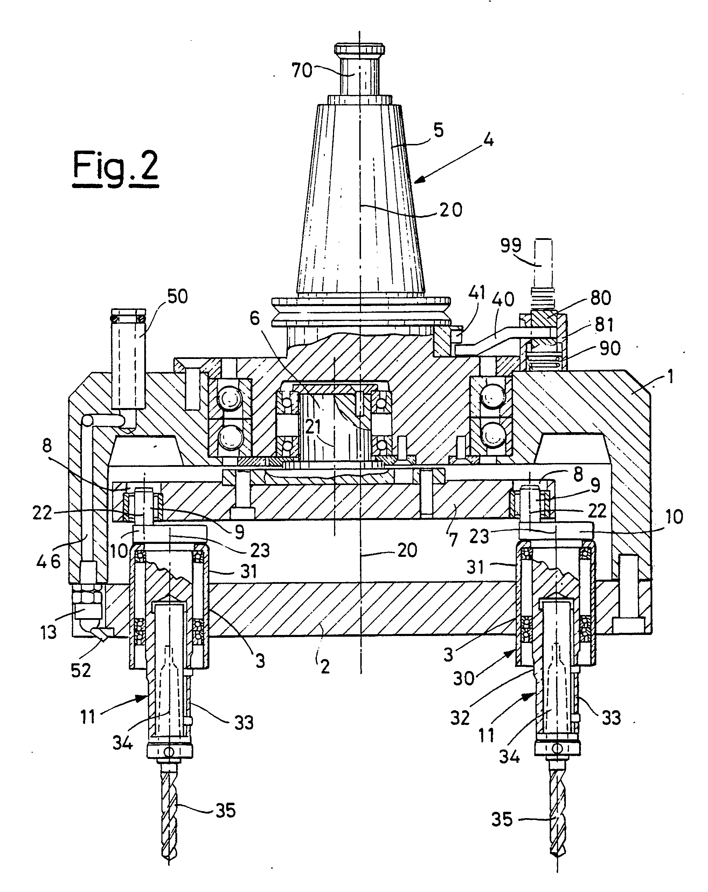

There is further provided a small locking rod 40 preventing the rotation of the control shaft 5 which is constrained to a small cylinder 80 sliding in a housing 81 which is integral with the casing 1 and is urged by a spring 90 to engage in a slot 41 of the control shaft 5 to prevent its rotation when the fixture is in rest position, as shown in Fig. 1, and up to an inverse displacement of said small locking rod 40 under the action of a disengagement member 99 (see Fig. 2) associated with the fixture support chuck.

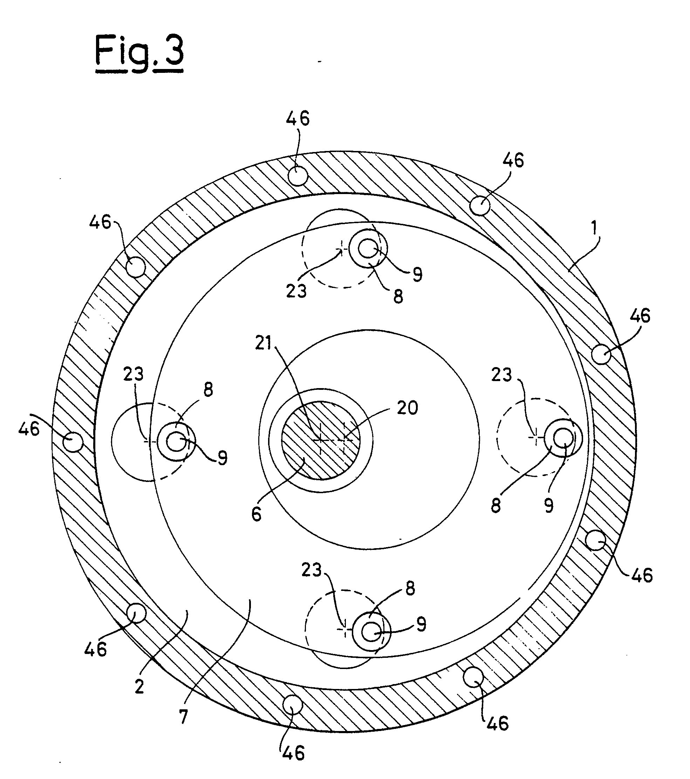

In the casing 1 there is inserted a connecting line 50 for a refrigerating and lubricating liquid of the perforation drills 35, which through conduits 46 arrives at corresponding adjustable nozzles 52 distributed along the periphery of the casing 1 (Fig. 3).

The operation of the fixture according to the invention is as follows.

With the control shaft 5 kept locked by the small rod 40 in the position of Fig. 1, the fixture is applied to the machine tool's chuck. Only when the fixture arrives at the operating position with the correct orientation, the connecting line 50 inserts itself in a fixed seat of the machine, obtaining the twin object of making the casing 1 rotationally integral with the machine tool and of connecting the connecting line 50 and the corresponding conduits 46 to the feed circuit of the refrigerating and lubricating liquid. At the same time the small cylinder 80 comes up against a small fixed pillar 99, which pushes it into the seat 81 against the spring 90, as shown in Fig. 2. The small locking rod 40 is thus disengaged from the seat 41 of the control shaft 5. This disengagement allows the rotation of the axial control shaft 5 round the respective axis 20 which, in turn, triggers the orbital motion of the driven shaft 6 round the axis 20 and the corresponding drive in orbital motion of the plate 7 constrained to it. The plate 7 transmits its motion to the pivots 9, which in turn through the cranks 10 cause the rotation of the small shafts 32 and the tools related to them. At this point it is sufficient to associate the piece to be drilled to the fixture to obtain the holes in the desired position.

If the diameters of the perforation drills are not very different from one another, a single rotation speed gives a good drilling efficiency for all drills. If some diameters are, on the other hand, much smaller than others, the corresponding drill supporting chucks 30 have the small shaft 32 divided transversally into two parts and between these two parts there is interposed a small epicyclic revolution multiplier of a type known in itself.

The depths, with respect to a reference face of the piece, of the individual holes to be drilled are in general different and thus the adaptors 34 and the individual drills 35 are as a consequence of different lengths. The computer, suitably instructed, can extract from the piece's machining program the basic list of the multiple tool, that is the list of adaptors and standard drills, and indicate the corresponding assembly positions.

## Claims

1. Multiple drilling fixture usable in automatic and flexible production systems, characterized in that it comprises a supporting casing (1) closed by a plate (2) provided with holes (3) for housing the machining tools (11) in a position corresponding to the holes to be accomplished in the piece, a motorization assembly (4) including an axial control shaft (5) and a driven shaft (6) eccentrically supported by said axial control shaft (5) and a plate (7) for the transmission of the motion from said motorization assembly to said machining tools (11) which is fastened to said driven shaft (6) and is provided with a plurality of holes (8) distributed in the same manner as said holes in the piece to be machined and laterally displaced with respect to them in an amount equal to the eccentricity of said driven shaft (6) so as to act as housing seats for eccentric pivots (9) associated with cranks (10) controlling the rotation of said machining tools (11).

2. Fixture according to claim 1, characterized in that there is provided a small locking rod (40) slidably supported by the casing (1) and elastically urged to engage with a slot (41) of the control shaft (5) to prevent the rotation when the fixture is in rest position and up to an inverse displacement of said small rod (40) under the action of a disengagement member (99) associated with fixture support chuck.

# Fig.1

Fig.2

# Fig.3

## DOCUMENTS CONSIDERED TO BE RELEVANT

EP 90201144.4

| Category | Citation of document with indication, where appropriate, of relevant passages | Relevant to claim | CLASSIFICATION OF THE APPLICATION (Int Cl⁴) |
|---|---|---|---|
| X | <u>DE - A1 - 3 433 492</u><br>(FUJI SEIKO LTD.)<br>* Totality * | 1 | B 23 B 39/16 |
| X | <u>US - A - 4 260 301</u><br>(REIMAN)<br>* Totality * | 1 | |
| A | <u>GB - A - 631 495</u><br>(SLACK & PARR LTD.)<br>* Totality * | 1 | |
| | | | **TECHNICAL FIELDS SEARCHED (Int Cl⁴)**<br><br>B 23 B 39/00 |

The present search report has been drawn up for all claims

| Place of search | Date of completion of the search | Examiner |
|---|---|---|
| VIENNA | 01-08-1990 | BRÄUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on or after the filing date
D : document cited in the application
L : document cited for other reasons

& : member of the same patent family, corresponding document

EPA Form 1503 03 82